(19) Europäisches Patentamt
European Patent Office
Office européen des brevets

(11) **EP 3 978 950 A1**

(12) **EUROPEAN PATENT APPLICATION**
published in accordance with Art. 153(4) EPC

(43) Date of publication:
**06.04.2022 Bulletin 2022/14**

(21) Application number: **20839762.0**

(22) Date of filing: **13.07.2020**

(51) International Patent Classification (IPC):
*G01S 7/481* (2006.01)   *G01C 3/06* (2006.01)
*G01S 17/931* (2020.01)   *G02B 13/00* (2006.01)
*G02B 13/14* (2006.01)   *G02B 26/10* (2006.01)

(52) Cooperative Patent Classification (CPC):
**G01C 3/06; G01S 7/481; G01S 17/931;
G02B 13/00; G02B 13/14; G02B 26/10**

(86) International application number:
**PCT/JP2020/027285**

(87) International publication number:
**WO 2021/010383 (21.01.2021 Gazette 2021/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.07.2019   JP 2019131060
29.01.2020   JP 2020012904**

(71) Applicant: **Canon Kabushiki Kaisha
Tokyo 146-8501 (JP)**

(72) Inventor: **NAKANO, Masatsugu
Tokyo 146-8501 (JP)**

(74) Representative: **WESER & Kollegen
Patentanwälte PartmbB
Radeckestraße 43
81245 München (DE)**

(54) **OPTICAL DEVICE, AND VEHICLE-MOUNTED SYSTEM AND MOVING DEVICE PROVIDED WITH SAME**

(57)   An optical apparatus 1, including: a deflecting unit 30 configured to deflect an illumination ray from a light source 11 to scan an object 100 and deflect a reflected ray from the object 100; a light guiding unit 20 configured to guide the illumination ray from the light source 11 to the deflecting unit 30 and to guide the reflected ray from the deflecting unit 30 to a light receiving element 53; and an optical system 40 having a plurality of lens surfaces, configured to guide the illumination ray from the deflecting unit 30 to the object 100 and to guide the reflected ray from the object 100 to the deflecting unit 30, wherein a normal at an incident point of the illumination ray on each of the plurality of lens surfaces and the illumination ray are not parallel to each other.

FIG. 1

**Description**

[Technical Field]

The present invention relates to an optical apparatus that receives light reflected on an illuminated object to detect the object.

[Background Art]

A distance measuring device to measure a distance to an object has been known in which the object is scanned by deflecting the illumination light from a light source by a deflection device so that the distance to the object is calculated based on a time until receiving the reflected light from the object or on a phase of the reflected light.

Patent Literature 1 discloses a distance measuring device in which diameters of an illumination light and a reflected light can be changed by a telescope disposed in the object side of a deflecting unit.

In addition, Patent Literature 2 discloses a distance measuring device in which a deflection angle of an illumination light from a deflecting unit can be changed by a magnification-varying lens disposed in an object side of the deflecting unit.

[Citation List]

[Patent Literature]

PTL 1: U.S. Patent Application Publication No. 2009/0201486
PTL 2: Japanese Patent Application Laid-Open No. 2016-102738

[Summary of Invention]

[Technical Problem]

However, in the distance measuring device disclosed in Patent Literatures 1 and 2, illumination light is reflected on each of lens surfaces of the telescope and the magnification-varying lens to become an unnecessary light which enters an image pickup element that deteriorates the accuracy in the distance measuring.

The present invention is to provide an optical apparatus in which an occurrence of unnecessary light at lens surfaces can be suppressed.

[Solution to Problem]

To achieve the above described purpose, an optical apparatus as one aspect of the present invention is characterized in that an optical apparatus, includes: a deflecting unit configured to deflect an illumination ray from a light source to scan an object and deflect a reflected ray from the object; a light guiding unit configured to guide the illumination ray from the light source to the deflecting unit and to guide the reflected ray from the deflecting unit to a light receiving element; and an optical system having a plurality of lens surfaces, configured to guide the illumination ray from the deflecting unit to the object and to guide the reflected ray from the object to the deflecting unit, wherein a normal at an incident point of the illumination ray on each of the plurality of lens surfaces and the illumination ray are not parallel to each other.

[Advantageous Effects of Invention]

According to the present invention, it is possible to provide an optical apparatus in which an occurrence of unnecessary light at lens surfaces can be suppressed.

[Brief Description of Drawings]

[FIG. 1]

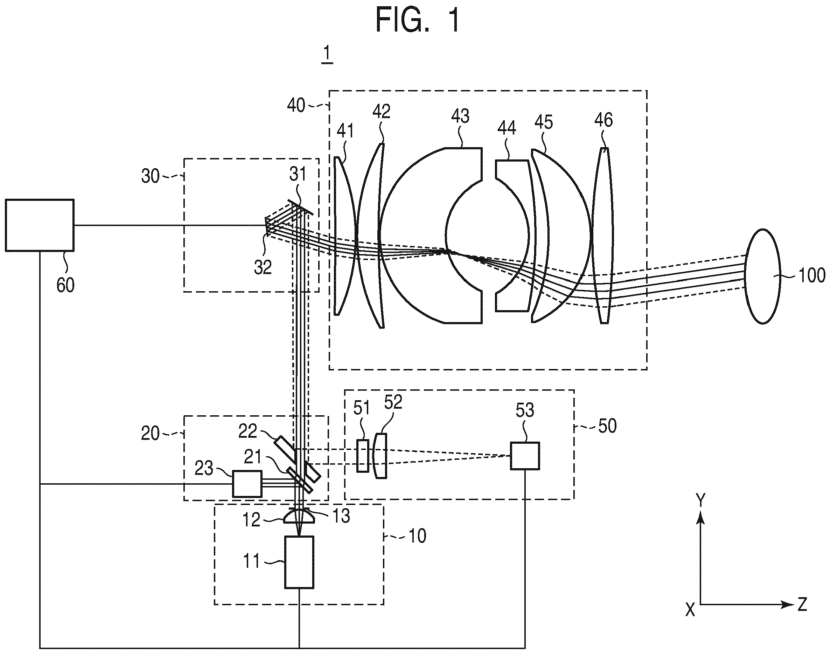

FIG. 1 is a schematic diagram of a main portion of the optical apparatus according to an embodiment.

[FIG. 2]

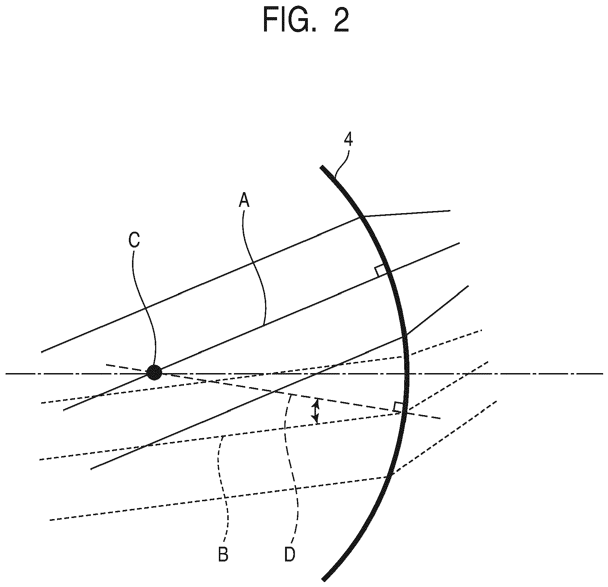

FIG. 2 is a diagram illustrating a condition in which unnecessary light occurs in a lens surface.

[FIG. 3A]

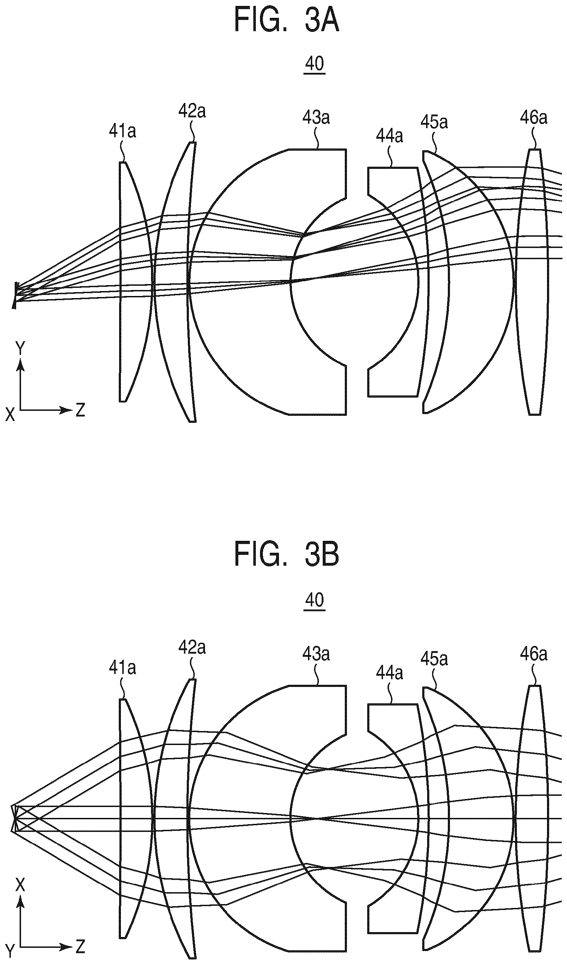

FIG. 3A is an optical path diagram of an illumination light in YZ cross section in an optical system according to first embodiment.

[FIG. 3B]

FIG. 3B is an optical path diagram of the illumination light in ZX cross section in the optical system according to first embodiment.

[FIG. 4A]

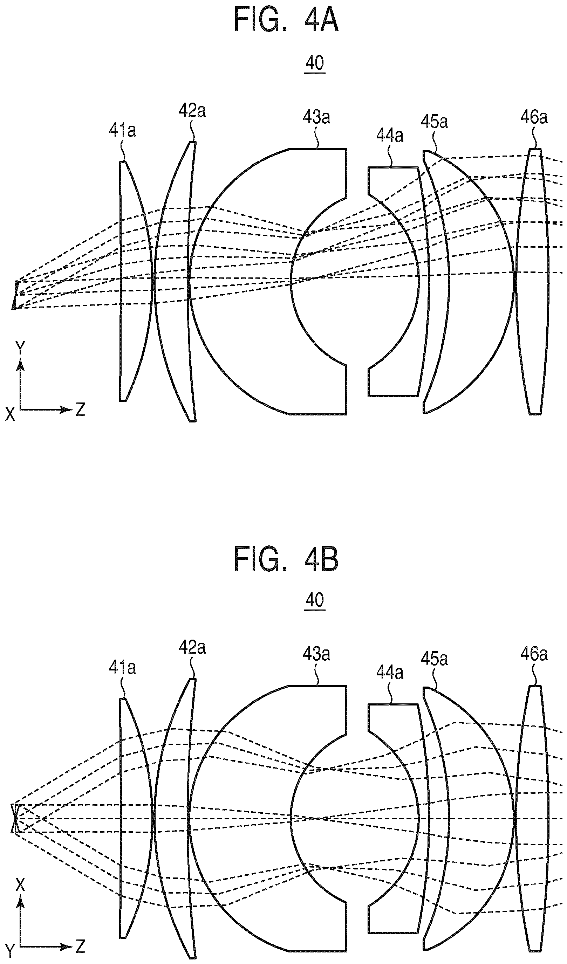

FIG. 4A is an optical path diagram of a reflected light in YZ cross section in the optical system according to first embodiment.

[FIG. 4B]

FIG. 4B is an optical path diagram of the reflected light in ZX cross section in the optical system according to first embodiment.

[FIG. 5]

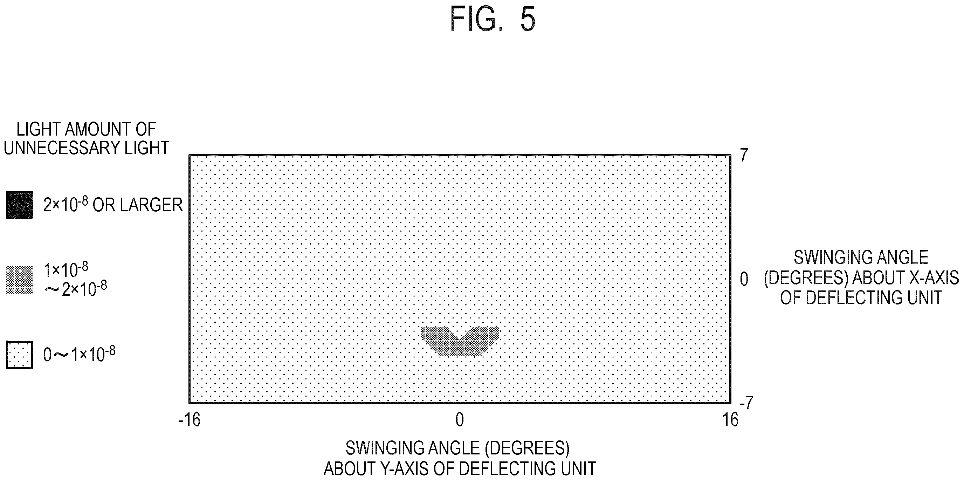

FIG. 5 is a diagram illustrating a relationship between a swinging angle of a deflecting unit and a light amount of unnecessary light according to first embodiment.

[FIG. 6A]

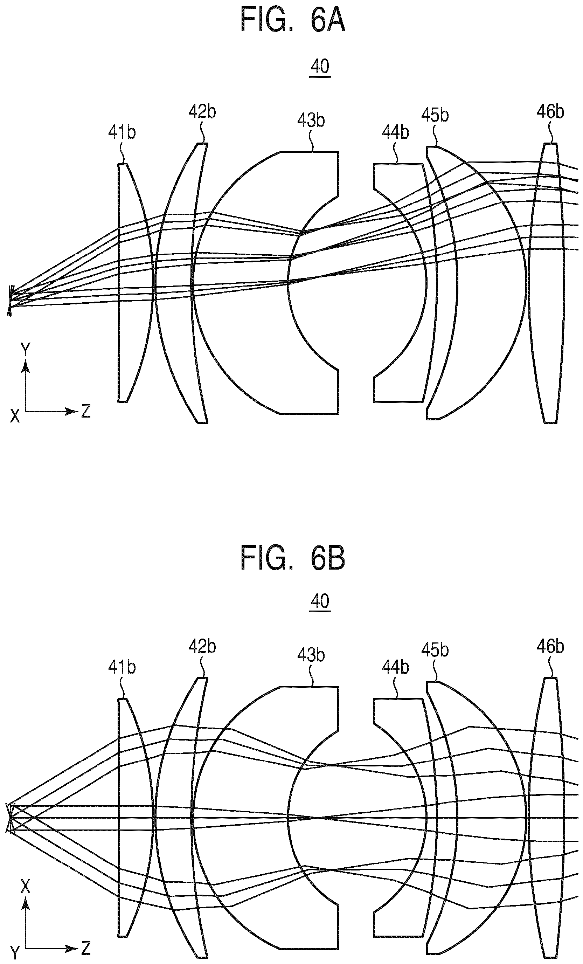

FIG. 6A is an optical path diagram of an illumination light in YZ cross section in an optical system according to second embodiment.

[FIG. 6B]

FIG. 6B is an optical path diagram of the illumination light in ZX cross section in the optical system according to second embodiment.

[FIG. 7A]

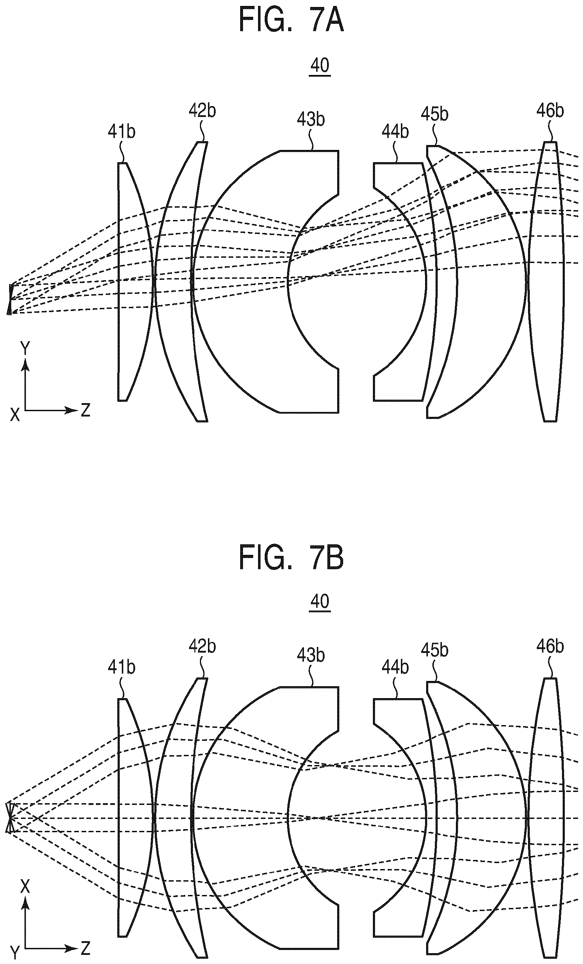

FIG. 7A is an optical path diagram of a reflected light in YZ cross section in the optical system according to second embodiment.

[FIG. 7B]

FIG. 7B is an optical path diagram of the reflected light in ZX cross section in the optical system according to second embodiment.

[FIG. 8]

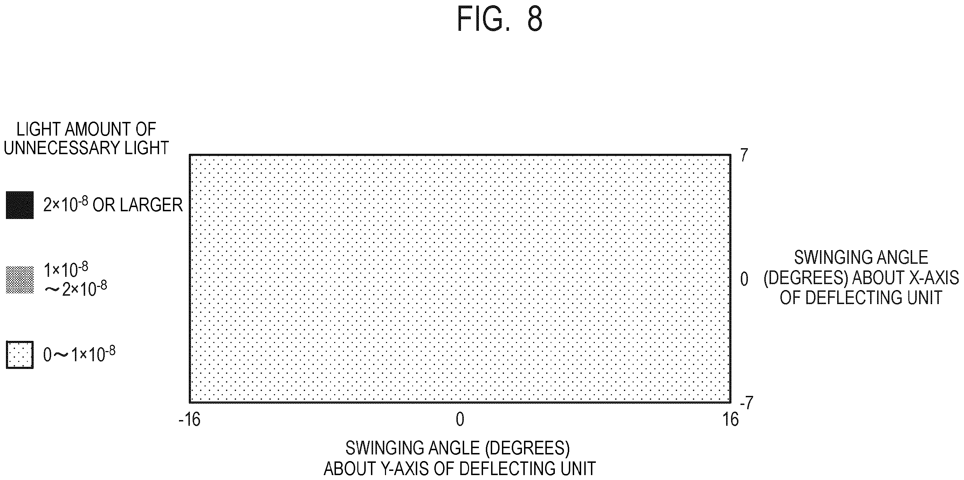

FIG. 8 is a diagram illustrating a relationship between a swinging angle of a deflecting unit and a light amount of unnecessary light according to second embodiment.

[FIG. 9A]

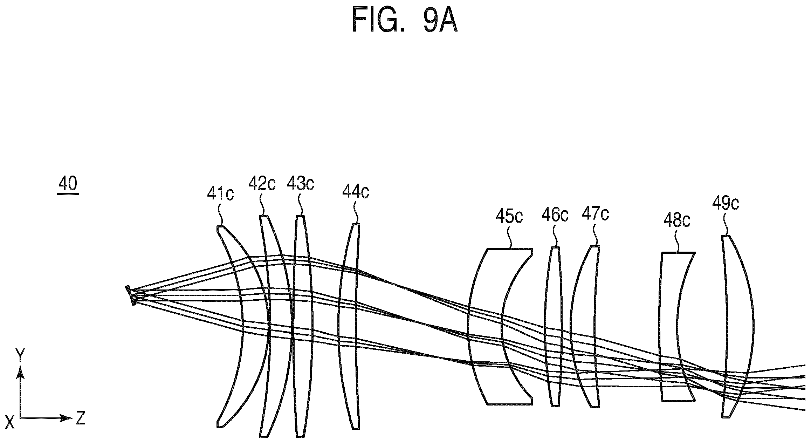

FIG. 9A is an optical path diagram of an illumination light in YZ cross section in an optical system according to third embodiment.

[FIG. 9B]

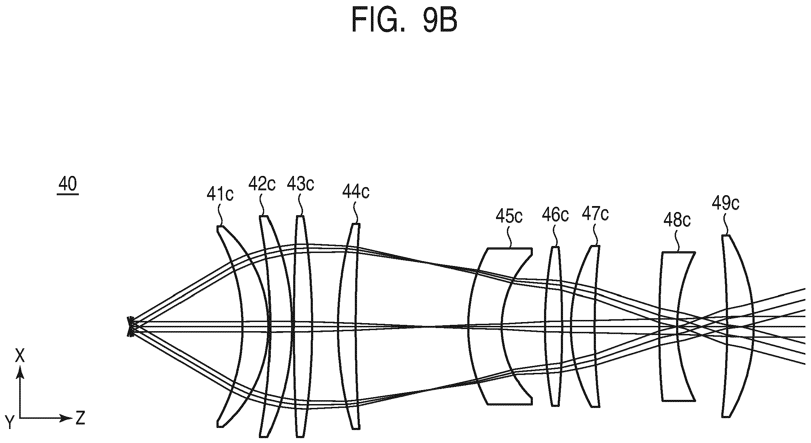

FIG. 9B is an optical path diagram of the illumination light in ZX cross section in the optical system according to third embodiment.

[FIG. 10A]

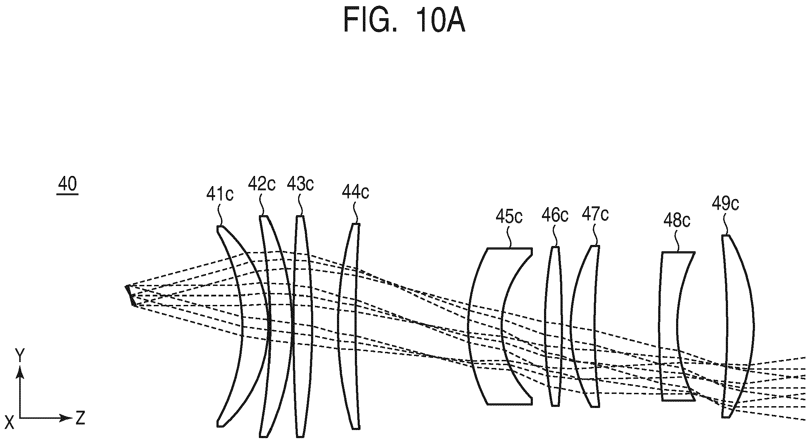

FIG. 10A is an optical path diagram of a reflected light in YZ cross section in the optical system according to third embodiment.

[FIG. 10B]

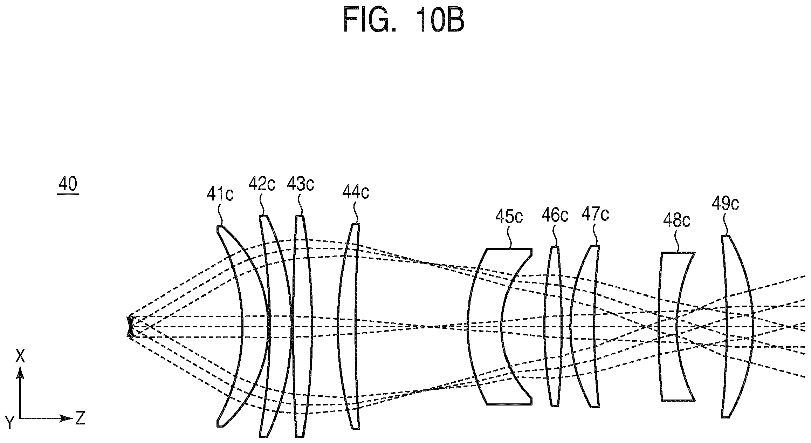

FIG. 10B is an optical path diagram of the reflected light in ZX cross section in the optical system according to third embodiment.

[FIG. 11]

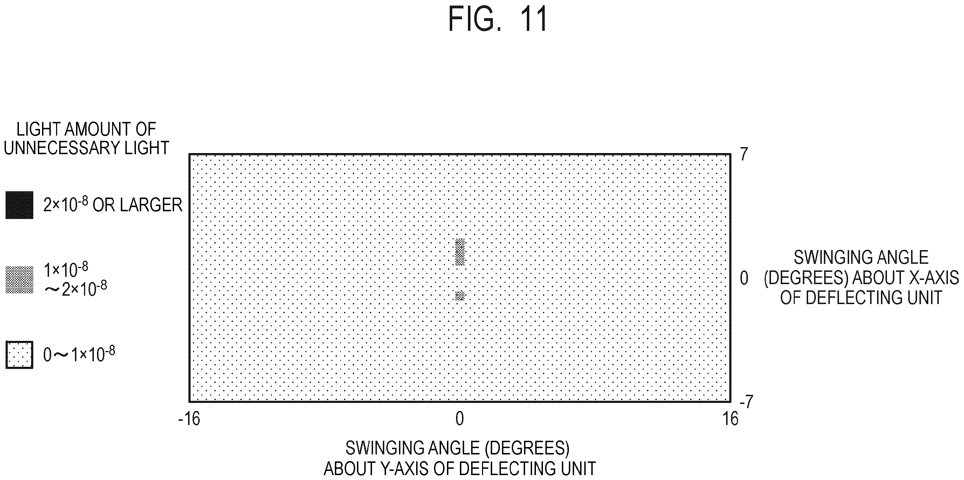

FIG. 11 is a diagram illustrating a relationship between a swinging angle of a deflecting unit and a light amount of unnecessary light according to third embodiment.

[FIG. 12]

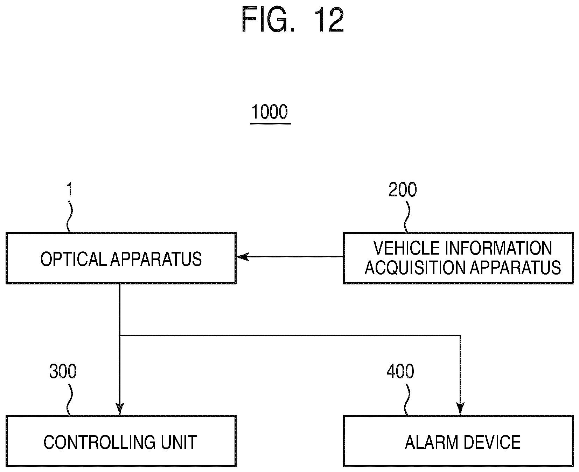

FIG. 12 is a function block diagram of an onboard system according to an embodiment.

[FIG. 13]

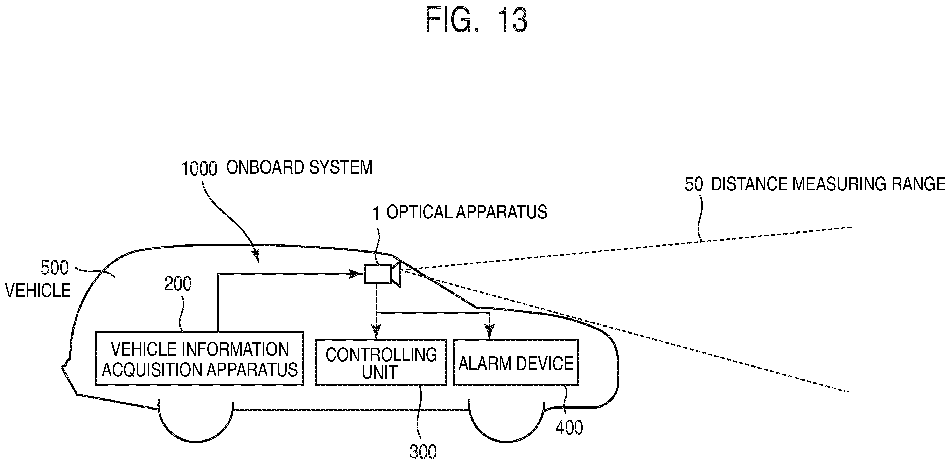

FIG. 13 is a schematic diagram of a vehicle (mobile device) according to an embodiment.

[FIG. 14]

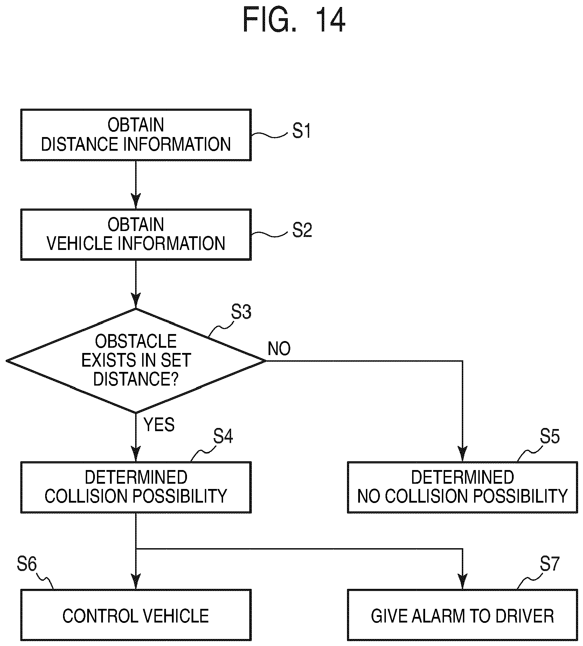

FIG. 14 is a flow chart illustrating an example operation of an onboard system according to an embodiment.

[Description of Embodiments]

A preferred embodiment of the present invention will be described below with reference to the drawings. Each drawing may be drawn to a scale different from the actual scale for convenience. In each of the drawings, the same member is denoted by the same reference numeral, and redundant description thereof is omitted.

FIG. 1 is a schematic view (schematic diagram) of a main part of an optical apparatus 1 in a cross section (YZ cross section) including an optical axis according to an embodiment of the present invention. The optical apparatus 1 includes a light source unit 10, a light guiding unit (branch unit) 20, a deflecting unit 30, an optical system 40, a light receiving unit 50 and a controlling unit 60. In FIG. 1, an optical path (illumination optical path) of illumination light traveling from the light source unit 10 to the object (object) 100 is shown by a solid line, and an optical path (received light path) of a reflected light traveling from the object 100 to the light receiving unit 50 is shown by a broken line.

The optical apparatus 1 can be used as a detection apparatus (image pickup apparatus) which detects (image pickup) the object 100 and a distance measuring device which acquires a distance (distance information) to the object 100, by receiving a reflected light from the object 100. The optical apparatus 1 according to the present embodiment uses a technique called LiDAR (Light Detection And Ranging), which calculates a distance to the object 100 based on time to receive reflected light from the object 100 or a phase of the reflected light.

The light source unit 10 includes a light source 11, an optical element 12, and stop 13. As the light source 11, semiconductor laser or the like which is a laser having a high energy concentration and good quality in directivity can be used. As will be described later, when the optical apparatus 1 is applied to an onboard system, there is a possibility that a human being is included in the object 100. Therefore, as the light source 11, it is desirable to adopt a device that emits infrared light, which has less influence to the human eye. The wavelength of an illumination light emitted from the light source 11 according to the present embodiment is 905 nm included in near-infrared region.

The optical element 12 has a function to change a degree of convergence of illumination light ejected from the light source 11. The optical element 12 according to the present embodiment is a collimator lens (light condensing element) which converts (collimates) diverged beam emitted from the light source 11 to a collimated beam. Here, the collimated beam includes not only strictly collimated beam but also approximately parallel beam such as slightly divergent beams and slightly convergent beams.

The stop 13 is a light shielding member in which an aperture is provided, which restricts the illumination light from the optical element 12 to determine its diameter of the beam (width of beam). The shape of the aperture of the stop 13 according to the present embodiment is an ellipse to match the shape of illumination light, but may be a shape other than ellipse if necessary. The diameter of the aperture of the stop 13 according to the present embodiment is 1.60 mm in X direction (major axis direction) and 1.30 mm in Z direction (minor axis direction).

The light guiding unit 20 is a member to separate an illumination path and a light receiving path from each other, guide the illumination light from the light source unit 10 to the deflecting unit 30, and to guide the reflected light reflected on the deflecting unit 30 to the light receiving unit 50. The light guiding unit 20 according to the present embodiment includes a transparent member 21, a perforated mirror (a with-hole mirror) 22, and a light receiving element 23 for light source. The transparent member 21 is a member for reflecting a part of the illumination light which has passed the aperture of the stop 13 and guiding the light to the light receiving element 23 for light source, and for which a glass substrate can be used, for example.

The perforated mirror 22 is a reflecting member provided with an opening (hole part) through which the illumination light from the light source unit 10 passes, and on which the reflected light from the deflecting unit 30 is reflected toward the light receiving unit 50 by a reflection region (reflecting part) other than the opening. The opening of the perforated mirror 22 according to the present embodiment is a cavity as shown in FIG. 1, but a transparent member may be provided in the opening. As a light guide member (branching member) for separating illumination light and reflected light, not only a perforated mirror but also a beam splitter, a prism and a half mirror may be used.

The light receiving element 23 for light source is a device for photoelectrically converting the illumination light from the light source unit 10 and outputting a signal. For example, a sensor similar to the light receiving element 53 in a light receiving unit 50 described later can be used as the light receiving element 23. A signal output from the light receiving element 23 for light source is used when controlling unit 60, described later, controls the light source unit 10. Note that, if necessary, an optical element (such as a filter or a lens) for guiding light from the transparent member 21 to a light reception surface of the light receiving element 23 for light source may be disposed between the transparent member 21 and the light receiving element 23 for light source.

The deflecting unit 30 is a member for deflecting the illumination light from the light guiding unit 20 to scan an object 100, and for deflecting the reflected light from the object 100 to guide to the light guiding unit 20. The deflecting unit 30 according to the present embodiment is constituted by a folding mirror 31 and a scanning mirror (movable mirror) 32.

The scanning mirror 32 is preferably rockable about at least two axis (two axis scanning mirror) to allow a two-dimensional scanning of the object 100. For example, a Galvano mirror or a MEMS (Micro Electro Mechanical System) mirror can be employed as the scanning mirror 32. The scanning mirror 32 according to the present embodiment is a MEMS mirror having a swinging angle (shake angle) about the X axis of ±7 degrees, a swinging angle about the Y axis of ±16 degrees, and a swinging frequency of about 1 kHz.

The optical system 40 is a member for guiding the illumination light from the deflecting unit 30 to the object 100 and guide the reflected light reflected on the object 100 to the deflecting unit 30. The optical system 40 according to the present embodiment is an optical system constituted by a plurality of lenses 41 to 46 having refractive powers (powers) and not having a refractive power in the entire optical system (afocal optical system). Specifically, the optical system 40 is a telescope for enlarging the diameter of illumination beam from the deflecting unit 30 and reducing the diameter of the reflected beam from the object 100.

The scanning mirror 32 according to the present embodiment is arranged at a position of an entrance pupil of the optical system 40. The optical system 40 according to the present embodiment has an absolute value of the optical magnification (lateral magnification) $\beta$ larger than 1 ($|\beta|>1$). Thus, a deflection angle of the principal ray of the illumination light emitted from the optical system 40 is smaller than a deflection angle of the principal light of the illumination light entering the optical system 40 after being deflected by the scanning mirror 32, to thereby improve a resolution in detecting an object.

An illumination light from the light source unit 10 is deflected by the deflecting unit 30 via the light guiding unit 20 and enlarged by the optical system 40 according to the optical magnification $\beta$ to illuminate the object 100. The reflected light from the object 100 is reduced by the optical system 40 according to the optical magnification $1/\beta$, and is deflected by the deflecting unit 30 to reach the light receiving unit 50. In this manner, the diameter of the illumination light can be enlarged by an arrangement of the optical system 40 on the object side of the deflecting unit 30.

Thus, since the diameter of the illumination beam can be further enlarged so that the spreading angle can be further reduced, sufficient illuminance and resolution can be secured even when the object is at a far distance. Further, by enlarging the pupil diameter by the optical system 40, more reflected light from the object can be taken in, so that a distance measured by the distance measuring and a distance measuring accuracy can be improved. Note that the optical system 40 may not be a telescope for reducing the diameter of the reflected light from the object, but may be an optical system that increases the diameter of the reflected light from the object as necessary. The optical system 40 may also not be an afocal optical system, and may optionally be an optical system having a refractive power in the entire system.

The light receiving unit (light receiving unit for distance measuring) 50 includes an optical filter 51, a condensing unit 52, and a light receiving element (light receiving element for distance measuring) 53. The optical filter 51 is a member that allows only intended light to pass through and blocks (absorbs) unnecessary light other than the intended light. The optical filter 51 according to the present embodiment is a band-pass filter which allows only light of wavelength bandwidth corresponding to the illumination light emitted from the light source 11 to pass through. The condensing unit 52 is a member for condensing a light having transmitted the optical filter 51 on the light receiving surface of the light receiving element 53, and is constituted by a single optical element (a condenser lens) in this embodiment. The configurations of the optical filter 51 and the condensing unit 52 are not limited to those in the present embodiment, in which the arrangement of each member may be swapped, and a plurality of the optical filters 51 and the condensing units may be included as necessary. For example, the condensing unit 52 may be constituted by a plurality of condenser lenses.

The light receiving element (light receiving element for distance measuring) 53 is an element (sensor) for receiving light from the condensing unit 52 to photoelectrically convert to output a signal. As a light receiving element 53, PD (Photo Diode), APD (Avalanche Photo Diode), SPAD (Single Photon Avalanche Diode) or the like can be employed. The reflected light from the object 100 illuminated by the illumination light is deflected by the deflecting unit 30 and reflected by a perforated mirror 22 to enter the light receiving element 53 via the optical filter 51 and the condensing unit 52.

The controlling unit 60 controls the light source 11, the light receiving element 23 for light source, the scanning mirror 32, the light receiving element 53, and the like. The controlling unit 60 is, for example, a processing unit (processor) such as a CPU (Central Processing Unit) or an arithmetic unit (computer) including the same. The controlling unit 60 drives each of the light source 11 and the scanning mirror 32 with a predetermined drive voltage and/or a predetermined drive frequency, and controls the output of the light source 11 (light amount of the illumination light) depending on a signal from the light receiving element 23 for light source. The controlling unit 60 may, for example, control the light source 11 to make the illumination light as a pulsed light, or perform an intensity modulation of the illumination light to generate a signal light.

The controlling unit 60 can also acquire a distance information of the object 100 based on a time period from a time (light emission time) at which the illumination light is emitted from the light source 11 to a time (light receiving time) at which the light receiving element 53 receives the reflected light from the object 100. At this time, the controlling unit 60 may acquire a signal from the light receiving element 53 at a particular frequency. Note that the distance information may be obtained based on a phase of the reflected light from the object 100 instead of based on the time period till a time the reflected light from the object 100 is received. More specifically, by obtaining a difference (phase difference) between a phase of a signal of the light source 11 and a signal output from the light receiving element 53 and multiplying the phase difference and a velocity of light, the distance information of the object 100 may be obtained.

The optical apparatus 1 as a distance measuring device using the LiDAR is suitable for an onboard system for identifying an object 100 such as a vehicle, a pedestrian, and an obstacle and controlling the own vehicle according to the distance information of the object 100. In case of using the LiDAR, a coaxial system in which an optical axis of the light source unit 10 and an optical axis of the light receiving unit 50 coincide to each other partially, or a non-coaxial system in which the optical axis do not coincide with each other may be adopted. The optical apparatus 1 according to the present embodiment is provided with the light guiding unit 20, thereby realizing a coaxial system while miniaturizing the entire apparatus.

In the onboard system or the like, it is required to detect an object at a short distance (about 1 m) to a long distance (about 300 m) from the optical apparatus 1 as the object 100. However, the strength of the reflected light (signal light) from the object 100 is very weak. For example, if the power of the illumination light emitted from the light source 11 is 1, the reflected light is about $10^{-7}$ to $10^{-8}$. The strength of the reflected light from the object 100 becomes smaller as the distance from the optical apparatus 1 to the object 100 is longer. For example, if the distance from the optical apparatus 1 to the object 100 is increased by 10 times, the strength of the reflected light which the optical apparatus 1 receives is decreased to about 1/100.

If the reflected light (dispersed light) which occurred unintentionally in each member in the optical apparatus 1, reaches the light receiving element 53 as unnecessary light, accuracy in measuring distance is affected. For example, if the ratio of unnecessary light to the signal light that the light receiving element 53 receives is increased, it becomes difficult to distinguish the signal light from the unnecessary light, and the accuracy in measuring distance is significantly deteriorated. It should be noted that there may be a method in which the light amount of the illumination light (the output of the light source 11) is increased in accordance with an increase of the distance to the object 100, but such method is not preferable because an influence on the human eye as the object 100 increases.

Such unnecessary light is likely to be caused at a lens surface disposed particularly in the image side of the light guiding unit 20. In the present embodiment, since the optical system 40 disposed closer to the object 100 than the light guiding unit 20 has a plurality of lenses, there is a possibility that the illumination light may become unnecessary light by being reflected (dispersed) at each of the lens surfaces. Therefore, in the present embodiment, in order to suppress the occurrence of the unnecessary light at each lens surface of the optical system 40, each lens is designed so that the illumination light is not perpendicularly incident on each lens surface. This will be described in detail below.

FIG. 2 is a schematic diagram showing an illumination light entering the lens surface 4 arranged closer to the object 100 than the deflecting unit 30. The illumination light deflected by swinging of the scanning mirror 32 enters the lens surface 4. That is, the illumination light enters the lens surface 4 in various incident angles. Some illumination ray A in the illumination beam indicated by the solid line enters the lens surface 4 perpendicularly because it passes through the center of curvature C of the lens surface 4. In this case, since the ray A is reflected at the lens surface 4 and travels on a reflection optical path which is in the opposite direction to the illumination optical path, there is a possibility that the ray A may enter the light receiving element 53 together with the reflected ray from the object 100 as unnecessary light. Even if providing an anti-reflection film having reflectance of about 0.1% on the lens surface 4, some ray could become such unnecessary light.

On the other hand, the illumination ray B indicated by the dotted line does not pass through the center of curvature C, and enters therefore the lens surface 4 in a certain incident angle. That is, a normal D at the incident point of the illumination ray B on the lens surface 4 and the illumination ray B are not parallel to each other (they do not overlap each other). Therefore, even if the illumination ray B is reflected by the lens surface 4, unnecessary light is not caused because the illumination ray B travels along an optical path different from the reflection optical path. Accordingly, in order to suppress the occurrence of the unnecessary light in the optical system 40, it is sufficient to arrange the deflecting unit 30 and the optical system 40 so that each of the illumination rays entering the lens surfaces does not pass through the centers of curvature of the lens surfaces (so as not to perpendicularly enter each of the lens surfaces).

Therefore, in the present embodiment, the deflecting unit 30 and the optical system 40 are arranged such that the normal at an incident point of the illumination ray in each of the lens surfaces of the optical system 40 and the illumination ray are not parallel to each other. Specifically, in a cross section (YZ cross section) including an illumination optical path and the deflection optical path, the deflecting unit 30 is arranged so that the optical path of the illumination ray in a central angle of view in a scanning range of the scanning mirror 32 and the optical axis of the optical system 40 are not coincide to each other. In addition, each lens of the optical system 40 is designed such that each illumination ray is not incident on each lens surface perpendicularly. Thus, the vertical entrance of the illumination ray to each lens surface of optical system 40 is suppressed, and the occurrence of unnecessary light can be sufficiently suppressed.

It should be noted that there are more than one method to prevent the illumination ray from vertically entering each of the lens surfaces. In the present embodiment, the deflecting unit 30 and the optical system 40 are arranged by being offset (shifted) from each other in Y direction, thereby reducing the vertical entrance of the illumination ray on each lens surface. However, a similar effect can be obtained by not shifting the deflecting unit 30 and the optical system 40 to each other but setting the scanning range of the deflecting unit 30 asymmetrically with respect to the optical axis of the optical system 40. Shifting and tilting may be combined.

Also, by using well-known optical simulation software or the like to check incident angle of each illumination ray on each lens surface in the optical system 40, it is possible to prevent the illumination ray from perpendicularly entering each lens surface. Design parameters for each lenses include, but is not limited to, a curvature (a radius of curvature), a thickness (a thickness in the optical axis direction), a surface shape, and a position (decentration) in the direction perpendicular to the optical axis. The shape of each lens surface may be aspherical surface, but it is desirable to use spherical surface in consideration of forming.

Let f denote the focal length of the condensing unit 52, H denote the maximum diameter of a light receiving surface of the light receiving element 53, and i denote the order of a lens surface of a plurality of lens surfaced in the optical system 40 when counting from the side of the deflecting unit 30. And, let Di-i denote a direction cosine vector of the illumination ray entering the i-th lens surface, $S_i$ denote a normal vector at the incident point in the i-th lens surface, and Min denote the minimum value of $cos^{-1}(D_{i-1} \cdot S_i)$. It is desirable to satisfy the following inequality (1).

$$Min > tan^{-1}(H/2f) \quad (1)$$

The inequality (1) shows a condition to suppress unnecessary light to enter the light receiving element 53 when the unnecessary light is caused at each of lens surfaces of the optical system 40. If the inequality (1) is not satisfied, it becomes difficult to suppress the unnecessary light generated at each of the lens surfaces of the optical system 40 to enter the light receiving element 53.

As described above, according to the optical apparatus 1 of the present embodiment, the occurrence of the unnecessary light in the lens surface can be suppressed. Thus, when the optical apparatus 1 is applied to a distance measuring device, a good accuracy in measuring distance can be realized without increasing the amount of light of illumination light. In addition, even when an infrared sensor having a lower sensitivity than a visible light sensor is used as the light receiving element 53, the distance information of the object 100 can be acquired at a higher accuracy.

[First Embodiment]

Hereinafter, an optical apparatus according to the first embodiment of the present invention will be described. In the optical apparatus according to the present embodiment, a description of a configuration equivalent to the optical apparatus 1 according to the above-described embodiment is omitted.

FIGS. 3A and 3B are schematic diagrams of an illumination optical path in an optical system 40 according to the present embodiment, wherein FIG. 3A shows a YZ cross section and FIG. 3B shows a ZX cross section. FIGS. 4A and 4B are schematic diagrams of a reflection optical path in the optical system 40 according to the present embodiment, in which FIG. 4A shows a YZ cross section and FIG. 4B shows a ZX cross section. The optical system 40 of the present embodiment is a telescope constituted by a plurality of lenses 41a to 46a having refractive powers and not having a refractive power in the entire system. Each lens surface of the lenses 41a to 46a is a spherical surface.

The surface data of each lens surface of the optical system 40 and various data of the optical system 40 according to the present embodiment are shown below. In the surface data, r represents a radius of curvature [mm] of the lens surface and d represents a distance [mm] of adjacent lens surface gap. nd indicates a refractive index for d-line (wavelength 587.6 nm) of medium of the adjacent lens surface gap and vd indicates Abbe number with d-line as reference of the medium of the adjacent lens surface gap. In the various data, the tilt amount indicates an angle between the illumination ray and the optical axis of the optical system 40 at the central angle of view of the deflecting unit 30, and the shift amount indicates a distance between the incident point of the illumination ray on the deflection surface of the scanning mirror 32 and the optical axis of the optical system 40.

Surface Data

| Surface Number | r | d | nd | vd |
|---|---|---|---|---|
| 1 | -1339.112 | 4.70 | 2.001 | 29.1 |
| 2 | -41.858 | 0.30 | | |
| 3 | 43.605 | 4.90 | 2.001 | 29.1 |
| 4 | 175.630 | 0.30 | | |
| 5 | 20.570 | 15.00 | 2.001 | 29.1 |
| 6 | 13.608 | 19.00 | | |
| 7 | -15.046 | 1.50 | 1.516 | 64.1 |
| 8 | -86.363 | 3.00 | | |
| 9 | -44.729 | 9.60 | 2.001 | 29.1 |
| 10 | -21.253 | 0.30 | | |
| 11 | 96.410 | 4.80 | 2.001 | 29.1 |
| 12 | -163.923 | 0.00 | | |

| Various Data (YZ cross section) | |
|---|---|
| Focal length (mm) | 883 |
| Optical magnification β | 1.90 |
| Interval to scanning mirror (mm) | 15.6 |
| Tilt amount (degrees) | 16.3 |
| Shift amount (mm) | 2.00 |

As shown in the various data, the deflecting unit 30 according to the present embodiment is arranged such that the optical path of the illumination ray at the central angle of view in a scanning range of the scanning mirror 32 in YZ cross section and the optical axis of the optical system 40 do not coincide with each other. Specifically, the illumination ray at the central angle of view of the deflecting unit 30 does not coincide with the optical axis of the optical system 40 and they form an angle with each other (tilts to each other). In the deflection surface of the scanning mirror 32, the incident point of the illumination ray and the optical axis of optical system 40 are spaced apart from (shifted) each other. By arranging in this manner, it is also possible to obtain an effect that the incident angle of the axal beam to each lens surface can be reduced.

The values of the left side of the inequality (1) described above are shown for the respective lens surfaces in the optical system 40, below. In the present embodiment, since f = 32.3 mm, H = 0.5 mm and the right side of the inequality (1) is 0.0077, all lens surfaces satisfy inequality (1).

| Left side value of the inequality (1) | |
|---|---|
| Surface number | |
| 1 | 0.041 |
| 2 | 0.023 |
| 3 | 0.040 |
| 4 | 0.033 |
| 5 | 0.043 |
| 6 | 0.061 |
| 7 | 0.042 |
| 8 | 0.067 |
| 9 | 0.043 |
| 10 | 0.072 |
| 11 | 0.025 |
| 12 | 0.022 |

FIG. 5 is a diagram showing a relationship between the swinging angle of the scanning mirror 32 of the deflecting unit 30 and the light amount of unnecessary light that reaches the light receiving element 53 according to the present embodiment. FIG. 5 shows not only the unnecessary light caused by the vertical entrance of the illumination light on each lens surface of the optical system 40, but also unnecessary light that is reflected by each lens surface a plurality of times to enter the light receiving element 53. As shown in FIG. 5, the light amount of the unnecessary light is about $2 \times 10^{-8}$ at the maximum, and the occurrence of the unnecessary light is sufficiently suppressed.

[Second Embodiment]

The optical apparatus according to the second embodiment of the present invention will be described below. In the optical apparatus according to the present embodiment, a description of a configuration equivalent to the optical apparatus according to the first embodiment described above is omitted.

FIGS. 6A and 6B are schematic diagrams of an illumination optical path in the optical system 40 according to the present embodiment, wherein FIG. 6A shows a YZ cross section and FIG. 6B shows a ZX cross section. FIGS. 7A and 7B are schematic diagrams of a reflection optical path in the optical system 40 according to the present embodiment, in which FIG. 7A shows a YZ cross section and FIG. 7B shows a ZX cross section. The optical system 40 of the present embodiment is a telescope constituted by a plurality of lenses 41b to 46b having refractive powers, and not having a refractive power in the entire system. Each lens surface of the lenses 41b to 46b is a spherical surface.

Surface data of each lens surface of the optical system 40 and the various data of the optical system 40 according to the present embodiment are shown below.

### Surface data

| Surface number | r | d | nd | vd |
|---|---|---|---|---|
| 1 | -1356.915 | 4.83 | 2.001 | 29.1 |
| 2 | -40.267 | 0.30 | | |
| 3 | 35.911 | 5.10 | 2.001 | 29.1 |
| 4 | 85.836 | 0.30 | | |
| 5 | 20.387 | 13.52 | 2.001 | 29.1 |
| 6 | 14.441 | 19.80 | | |
| 7 | -15.900 | 1.50 | 1.516 | 64.1 |
| 8 | -71.504 | 2.91 | | |
| 9 | -39.818 | 9.86 | 2.001 | 29.1 |
| 10 | -21.452 | 0.30 | | |
| 11 | 88.020 | 5.07 | 2.001 | 29.1 |
| 12 | -182.994 | 0.00 | | |

### Various data (YZ cross section)

| | |
|---|---|
| Focal length (mm) | 718 |
| Optical magnification $\beta$ | 1.86 |
| Interval to scanning mirror (mm) | 15.5 |
| Tilt amount (degrees) | 17.2 |
| Amount of shifting (mm) | 2.52 |

The values of the left side of the inequality (1) described above are shown for each of lens surfaces of the optical system 40, below. In this embodiment, as in the case of the first embodiment, since the right side of the inequality (1) is 0.0077, any lens surface satisfies the inequality (1).

### Value of left side of inequality (1)

| Surface number | |
|---|---|
| 1 | 0.057 |
| 2 | 0.026 |
| 3 | 0.048 |
| 4 | 0.041 |
| 5 | 0.065 |
| 6 | 0.076 |
| 7 | 0.046 |
| 8 | 0.050 |
| 9 | 0.049 |
| 10 | 0.091 |
| 11 | 0.041 |
| 12 | 0.028 |

FIG. 8 is a diagram showing a relationship between the swinging angle of the scanning mirror 32 in the deflecting unit 30 and the light amount of the unnecessary light that reaches the light receiving element 53 according to the present embodiment. As shown in FIG. 8, the light amount of the unnecessary light is about $1 \times 10^{-8}$ at most, and the occurrence of the unnecessary light is sufficiently suppressed. In the present embodiment, compared with the first embodiment, the unnecessary light that reaches the light receiving element 53 after being reflected by each of the lens surfaced a plurality of times can be reduced.

[Third Embodiment]

The optical apparatus according to the third embodiment of the present invention will be described below. In the optical apparatus according to the present embodiment, a description of a configuration equivalent to the optical apparatus according to the first embodiment described above is omitted.

FIGS. 9A and 9B are schematic diagrams of the illumination optical path in the optical system 40 according to the present embodiment, in which FIG. 9A shows a YZ cross section and FIG. 9B shows a ZX cross section. FIGS. 10A and 10B are schematic diagrams of the reflection optical path in the optical system 40 according to the present embodiment, in which FIG. 10A shows a YZ cross section and FIG. 10B shows a ZX cross section. The optical system 40 of the present embodiment is a telescope constituted by a plurality of lenses 41c to 49c having refractive powers, and not having a refractive power in the entire system. Each lens surface of the lenses 41a to 49b is a spherical surface.

In the present embodiment, unlike the first and second embodiments, the illumination ray at the central angle of view of the deflecting unit 30 coincides with the optical axis of the optical system 40. On the other hand, in the deflection surface of the scanning mirror 32, the incident point of the illumination ray and the optical axis of the optical system 40 are spaced apart (shifted) from each other. With such an arrangement, since a ray at the central angle of view when emitted from the optical system 40 coincides with the optical axis of the optical system 40, a central position of the screen does not change even if the optical system 40 is removed from the optical apparatus. Accordingly, the angle of view can be changed by attaching/detaching the optical system 40 to/from the optical apparatus.

Surface data of each lens surface of the optical system 40 and various data of the optical system 40 according to the present embodiment are shown below.

Surface data

| Surface number | r | d | nd | vd |
|---|---|---|---|---|
| 1 | -36.897 | 5.00 | 2.001 | 29.1 |
| 2 | -25.536 | 0.30 | | |
| 3 | -112.513 | 4.20 | 2.001 | 29.1 |
| 4 | -50.144 | 0.30 | | |
| 5 | 361.726 | 3.60 | 2.001 | 29.1 |
| 6 | -133.185 | 5.00 | | |
| 7 | 69.894 | 3.40 | 2.001 | 29.1 |
| 8 | 290.125 | 21.60 | | |
| 9 | 31.578 | 6.50 | 1.516 | 64.1 |
| 10 | 19.306 | 8.30 | | |
| 11 | 85.115 | 3.30 | 2.001 | 29.1 |
| 12 | -179.847 | 1.70 | | |
| 13 | 32.263 | 4.60 | 1.516 | 64.1 |
| 14 | 131.553 | 12.40 | | |
| 15 | 157.459 | 3.50 | 1.516 | 64.1 |
| 16 | 31.435 | 9.60 | | |
| 17 | -153.153 | 5.10 | 2.001 | 29.1 |
| 18 | -34.971 | 0.00 | | |

Various data (YZ cross section)

| | |
|---|---|
| Focal length (mm) | 919 |
| Optical magnification $\beta$ | 1.97 |
| Interval to scanning mirror (mm) | 21.6 |
| Tilt amount (degrees) | 0.0 |
| Amount of shifting (mm) | 6.00 |

The values of the left side of the inequality (1) described above are shown for each of lens surfaces in the optical system 40 below. In this embodiment, as in the case of the first embodiment, since the right side of the inequality (1) is 0.0077, any lens surface satisfies the inequality (1).

Value of left side of inequality (1)

| Surface number | |
|---|---|
| 1 | 0.042 |

(continued)

| Surface number | |
| --- | --- |
| 2 | 0.101 |
| 3 | 0.041 |
| 4 | 0.092 |
| 5 | 0.041 |
| 6 | 0.090 |
| 7 | 0.043 |
| 8 | 0.087 |
| 9 | 0.210 |
| 10 | 0.157 |
| 11 | 0.327 |
| 12 | 0.028 |
| 13 | 0.361 |
| 14 | 0.037 |
| 15 | 0.043 |
| 16 | 0.255 |
| 17 | 0.044 |
| 18 | 0.103 |

FIG. 11 is a diagram showing a relationship between the swinging angle of the scanning mirror 32 in the deflecting unit 30 and a light amount of the unnecessary light that reaches the light receiving element 53 according to the present embodiment. As shown in FIG. 11, the light amount of the unnecessary light is about $1 \times 10^{-8}$ at most, and the occurrence of the unnecessary light is sufficiently suppressed. In the present embodiment, compared with the first embodiment, the unnecessary light that reaches the light receiving element 53 after being reflected by each lens surface a plurality of times can be reduced.

[Onboard System]

FIG. 12 is a configuration diagram of the optical apparatus 1 according to the present embodiment and an onboard system (driver supporting device) 1000 having the same. The onboard system 1000 is a device that is supported by a moving member (mobile apparatus) that is movable such as an automobile (vehicle) and is to support the driving (steering) of the vehicle based on distance information of object such as obstacles or pedestrians around the vehicle acquired by the optical apparatus 1. FIG. 13 is a schematic diagram of a vehicle 500 including the onboard system 1000. FIG. 13 shows a case where a distance measuring range (detection range) of the optical apparatus 1 is set to the front of the vehicle 500, but the distance measuring range may be set to the rear or side of the vehicle 500.

As shown in FIG. 12, the onboard system 1000 includes an optical apparatus 1, a vehicle information acquisition device 200, a controlling unit (ECU: Electronic Control Unit) 300, and a warning device (warning unit) 400. In the onboard system 1000, a controlling unit 60 provided in the optical apparatus 1 has a function as a distance obtaining unit (obtaining unit) and a collision determination unit (determination unit). However, if necessary, the onboard system 1000 may be provided with a distance obtaining unit and a collision determination unit separately from the controlling unit 60, and each of the distance obtaining unit and the collision determination unit may be provided outside the optical apparatus 1 (for example, inside the vehicle 500). Alternatively, the controlling unit 300 may be used as the controlling unit 60.

FIG. 14 is a flowchart showing an operation example of the onboard system 1000 according to the present embodiment. The operation of the onboard system 1000 will be described below with reference to this flowchart.

First, in step S1, based on a signal output from the light receiving unit 40 that receives a reflected light from an object around the vehicle that is illuminated by the light source unit 10 of the optical apparatus 1, the controlling unit 60 receives a distance information of the object. In step S2, the vehicle information acquisition device 200 acquires vehicle information including a vehicle speed, a yaw rate, a steering angle and the like. In step S3, by use of the distance information acquired in step S1 and the vehicle information acquired in step S2, the controlling unit 60 determines whether the distance to the object is included in a range of the preset setting distance.

Thus, it is possible to determine whether or not an object exists in the setting distance around the vehicle, and to determine the possibility of collision between the vehicle and the object. It should be noted that steps S1 and S2 may be performed in an order opposite to that described above, or may be performed in parallel with each other. When the object exists in the setting distance, the controlling unit 60 determines that "there is a possibility of collision" (step S4), and when the object does not exist in the setting distance, determines that "there is no possibility of collision" (step S5).

Next, when determining that "there is a possibility of collision", the controlling unit 60 notifies (transmits) the determination result to the controlling unit 300 and the warning device 400. At this time, the controlling unit 300 controls the vehicle based on the determination result of the controlling unit 60 (step S6), and the warning device 400 performs warning to the user (driver) of the vehicle based on the determination result of the controlling unit 60 (step S7). The determination result may be notified to at least one of the controlling unit 300 and the warning device 400.

The controlling unit 300 controls a vehicle, for example, by applying a brake, returning an accelerator, turning a steering wheel, generating a control signal for generating a braking force on each wheel to suppress an output of an engine or a motor. In addition, the warning device 400 performs a screen operation such as emitting warning sound, displaying warning information on warning of a car navigation system or the like, or providing vibration to a seat belt or a steering wheel.

As described above, according to the onboard system 1000 of the present embodiment, the object can be detected and the distance can be measured by the above described process, to avoid a collision between the vehicle and the object. In particular, by applying the optical apparatus 1 according to each of the embodiments described above to the onboard system 1000, a high accuracy in measuring distance can be realized, so that the detection of an object and collision determination can be performed at a high accuracy.

In the present embodiment, the onboard system 1000 is applied to the driving support (collision damage reduction), but the present invention is not limited thereto, and the onboard system 1000 may be applied to a cruise control (including a cruise control with an adaptive cruise control function), an automatic driving, and the like. The onboard system 1000 is not limited to a vehicle such as an automobile, and can be applied to a moving member such as a ship, an aircraft, an industrial robot, and the like. The present invention is applicable not only to a moving member but also to various apparatuses utilizing object recognition such as an intelligent transport system (ITS) and a monitoring system.

The onboard system 1000 and the mobile device 500 may be provided with a notification device (notification unit) for notifying the manufacturer (manufacturer) of the onboard system or the distributor (dealer) of the mobile device of the fact that the mobile device 500 collides with an obstacle. For example, the notification device may be a device for transmitting information relating to a collision (collision information) between the mobile device 500 and an obstacle to a preset external notification destination by electronic mail or the like.

As described above, by adopting the configuration in which the notification device automatically notifies the collision information, it is possible to promptly take measures such as an inspection and a repair after the occurrence of collision. It should be noted that the notification destination of the collision information may be an insurance company, a medical institution, a police station, or any other destination set by the user. In addition, a notification device may be configured to notify a notification destination of not only the collision information, but also a failure information of each part or a consumption information of consumables. The presence/absence of the collision may be detected using the distance information obtained based on the output from the light receiving unit 2 described above, or may be detected by another detection unit (sensor).

[Modified Embodiment]

Although preferred embodiments and examples of the present invention have been described above, the present invention is not limited to these embodiments and examples, and various combinations, variations deformation, and variations are possible within a range of the spirit thereof.

In each embodiment, each member is integrated (integrally supported), but each member may be configured as separate bodies if necessary. For example, the light guiding unit 20 or the deflecting unit 30 may be detachable from the light source unit 10 or the light receiving unit 50. In such case, a connecting member (connecting part) for connecting each other may be provided in a holding member (housing) for holding each member. In such case, in order to improve an accuracy of positioning between the light source unit 10 and the light guiding unit 20, the stop 13 may be provided in the light guiding unit 20 and is supported by a holding member common to a branch optical element.

The invention is not restricted to the embodiments described above, and various modifications and deformations are possible without departing from the spirit and range of the present invention. Accordingly, in order to make the present invention public, the following claims are attached.

The present application is based upon and claims priority to Japanese Patent Application No., 2019-131060 filed July 16, 2019, and Japanese Patent Application No. 2020-012904 filed January 29, 2020, the entire contents of which are incorporated herein by reference.

[Reference Signs List]

1       Optical apparatus;
11      Light source
20      Light guide part
30      Deflection part
40      Optical system
53      Light receiving element
100     Object

**Claims**

1.  An optical apparatus comprising:

    a deflecting unit configured to deflect an illumination ray from a light source to scan an object and deflect a reflected ray from the object;
    a light guiding unit configured to guide the illumination ray from the light source to the deflecting unit and guide the reflected ray from the deflecting unit to a light receiving element; and
    an optical system having a plurality of lens surfaces, configured to guide the illumination ray from the deflecting unit to the object and guide the reflected ray from the object to the deflecting unit,
    wherein a normal at an incident point of the illumination ray on each of the plurality of lens surfaces and the illumination ray are not parallel to each other.

2.  The optical apparatus according to claim 1, comprising a condensing unit configured to condense a reflected ray from the light guiding unit on the light receiving element,
    wherein a following inequality is satisfied,

$$\mathrm{Min} > \tan^{-1}(H/2f)$$

    where f represents a focal length of the condensing unit, H represents a maximum diameter of a light receiving surface of the light receiving element, i represents an order of each of the plurality of lens surfaces when counted from a side of the deflecting unit, Di-i represents a direction cosine vector of the illuminating ray entering an i-th lens surface, $S_i$ represents a normal vector at the incident point on the i-th lens surface, an Min represents a minimum value of $\cos^{-1}(D_{i-1} \cdot S_i)$.

3.  The optical apparatus according to claim 1 or 2, wherein the deflecting unit is arranged so that an optical path of the illumination ray at a central angle of view in a scanning range and an optical axis of the optical system do not coincide with each other in a cross section including the illumination ray and the reflected ray.

4.  The optical apparatus according to any one of claims 1 to 3, wherein an incident point of the illumination ray and an optical axis of the optical system are spaced apart from each other in a deflection surface of the deflecting unit.

5.  The optical apparatus according to any one of claims 1 to 4, wherein the optical system enlarges a diameter of illumination beam from the deflecting unit and reduces a diameter of reflected beam from the object.

6.  The optical apparatus according to any one of claims 1 to 5, wherein a deflection surface of the deflecting unit is arranged at a position of an entrance pupil of the optical system.

7.  The optical apparatus according to any one of claims 1 to 6, wherein the optical system does not have a refractive power in an entire system.

8.  The optical apparatus according to any one of claims 1 to 7, wherein each of the plurality of lens surfaces is spherical.

9.  The optical apparatus according to any one of claims 1 to 8, comprising a controlling unit for obtaining a distance information of the obj ect based on an output of the light receiving element.

10. An onboard system comprising an optical apparatus according to any one of claims 1 to 9, wherein a possibility of collision between a vehicle and the object is determined based on a distance information of the object obtained by the optical apparatus.

11. The onboard system according to claim 10, comprising a controlling apparatus configured to output a control signal to generate a braking force to the vehicle when it is determined that there is a possibility of collision between the vehicle and the object.

12. The onboard system according to claim 10 or 11, comprising a warning device configured to generate a warning to a driver of the vehicle when it is determined that there is a possibility of collision between the vehicle and the object.

13. The onboard system according to any one of claims 10 to 12, comprising a notification device configured to notify an outside of an information related to a collision between the vehicle and the object.

14. A moving device comprising an optical apparatus according to any one of claims 1 to 9, wherein the movable device is movable while holding the optical apparatus.

15. The moving device according to claim 14, comprising a determination unit configured to determine a possibility of collision with the object based on a distance information of the object obtained by the optical apparatus.

16. The moving device of claim 15, comprising a controlling unit configured to output a control signal to control a movement when it is determined that there is a possibility of collision with the object.

17. The moving device according to claim 15 or 16, comprising a warning unit configured to perform warning to an operator of the moving device when it is determined that there is a possibility of collision with the object.

18. A moving device according to any one of claims 15 to 17, comprising a notification unit configured to notify the outside of an information related to a collision with the object.

# FIG. 1

EP 3 978 950 A1

FIG. 2

# FIG. 3A

40

# FIG. 3B

40

# FIG. 4A

40

41a  42a  43a  44a  45a  46a

Y
X  Z

# FIG. 4B

40

41a  42a  43a  44a  45a  46a

X
Y  Z

# FIG. 5

LIGHT AMOUNT OF
UNNECESSARY LIGHT

$2×10^{-8}$ OR LARGER

$1×10^{-8}$
$\sim 2×10^{-8}$

$0 \sim 1×10^{-8}$

SWINGING ANGLE
(DEGREES) ABOUT X-AXIS
OF DEFLECTING UNIT

7

0

-7

-16          0          16

SWINGING ANGLE (DEGREES)
ABOUT Y-AXIS OF DEFLECTING UNIT

EP 3 978 950 A1

# FIG. 6A

40

# FIG. 6B

40

# FIG. 7A

<u>40</u>

# FIG. 7B

<u>40</u>

# FIG. 8

LIGHT AMOUNT OF
UNNECESSARY LIGHT

■ $2 \times 10^{-8}$ OR LARGER

▦ $1 \times 10^{-8}$
$\sim 2 \times 10^{-8}$

□ $0 \sim 1 \times 10^{-8}$

SWINGING ANGLE
(DEGREES) ABOUT X-AXIS
OF DEFLECTING UNIT

7

0

-7

-16          0          16

SWINGING ANGLE (DEGREES)
ABOUT Y-AXIS OF DEFLECTING UNIT

EP 3 978 950 A1

FIG. 9A

## FIG. 9B

# FIG. 10A

EP 3 978 950 A1

# FIG. 10B

# FIG. 11

LIGHT AMOUNT OF
UNNECESSARY LIGHT

$2 \times 10^{-8}$ OR LARGER

$1 \times 10^{-8}$
$\sim 2 \times 10^{-8}$

$0 \sim 1 \times 10^{-8}$

SWINGING ANGLE
(DEGREES) ABOUT X-AXIS
OF DEFLECTING UNIT

SWINGING ANGLE (DEGREES)
ABOUT Y-AXIS OF DEFLECTING UNIT

EP 3 978 950 A1

# FIG. 12

1000

1

OPTICAL APPARATUS

200

VEHICLE INFORMATION
ACQUISITION APPARATUS

300

CONTROLLING UNIT

400

ALARM DEVICE

# FIG. 13

1000 ONBOARD SYSTEM

50 DISTANCE MEASURING RANGE

1 OPTICAL APPARATUS

500
VEHICLE

200

VEHICLE INFORMATION
ACQUISITION APPARATUS

CONTROLLING
UNIT

ALARM DEVICE

400

300

EP 3 978 950 A1

# FIG. 14

```
┌─────────────────────────┐
│        OBTAIN           │ ⟍ S1
│  DISTANCE INFORMATION   │
└─────────────────────────┘
            │
            ▼
┌─────────────────────────┐
│        OBTAIN           │ ⟍ S2
│  VEHICLE INFORMATION    │
└─────────────────────────┘
            │
            ▼
        S3
      ◇ OBSTACLE              NO
      EXISTS IN SET    ─────────────────────┐
       DISTANCE? ◇                          │
          │ YES                             │
          ▼ S4                              ▼ S5
┌─────────────────────────┐      ┌──────────────────────────────┐
│      DETERMINED         │      │        DETERMINED            │
│  COLLISION POSSIBILITY  │      │  NO COLLISION POSSIBILITY    │
└─────────────────────────┘      └──────────────────────────────┘
   S6     │                                 │             S7
          ▼                                 ▼
┌─────────────────────────┐      ┌──────────────────────────────┐
│     CONTROL VEHICLE     │      │    GIVE ALARM TO DRIVER      │
└─────────────────────────┘      └──────────────────────────────┘
```

## INTERNATIONAL SEARCH REPORT

| International application No. |
| --- |
| PCT/JP2020/027285 |

A.  CLASSIFICATION OF SUBJECT MATTER
G01S  7/481(2006.01)i;  G01C  3/06(2006.01)i;  G01S  17/931(2020.01)i;  G02B
13/00(2006.01)i; G02B 13/14(2006.01)i; G02B 26/10(2006.01)i
FI:      G01S7/481  A;  G01S17/931;  G02B13/00;  G02B13/14;  G02B26/10  D;
         G01C3/06 120Q

According to International Patent Classification (IPC) or to both national classification and IPC

B.  FIELDS SEARCHED

Minimum documentation searched (classification system followed by classification symbols)
G01S7/48-7/51;      G01S17/00-17/95;      G01C3/06-3/08;      G01B11/00-11/30;
G02B13/00; G02B13/14; G02B26/10

Documentation searched other than minimum documentation to the extent that such documents are included in the fields searched
Published examined utility model applications of Japan          1922-1996
Published unexamined utility model applications of Japan        1971-2020
Registered utility model specifications of Japan                1996-2020
Published registered utility model applications of Japan        1994-2020

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| X | JP 2013-210379 A (DENSO WAVE INCORPORATED) 10.10.2013 (2013-10-10) paragraphs [0103]-[0105], [0069]-[0074], fig. 13, 4-5 | 1-18 |
| A | US 2017/0322075 A1 (DATALOGIC IP TECH, S. R. L.) 09.11.2017 (2017-11-09) column "abstract", fig. 3 | 1-18 |
| A | JP 2008-076557 A (RICOH CO., LTD.) 03.04.2008 (2008-04-03) column "abstract", fig. 3 | 1-18 |
| A | JP 9-274134 A (ASAHI OPTICAL CO., LTD.) 21.10.1997 (1997-10-21) column "abstract", fig. 1 | 1-18 |

☐ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 29 September 2020 (29.09.2020) | 13 October 2020 (13.10.2020) |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

| International application No. |
| --- |
| PCT/JP2020/027285 |

| Patent Documents referred in the Report | Publication Date | Patent Family | Publication Date |
| --- | --- | --- | --- |
| JP 2013-210379 A | 10 Oct. 2013 | JP 2011-141261 A <br> JP 2013-210378 A | |
| US 2017/0322075 A1 | 09 Nov. 2017 | WO 2017/191665 A1 <br> EP 3242145 A1 | |
| JP 2008-076557 A | 03 Apr. 2008 | US 2008/0068693 A1 <br> column "abstract", <br> fig. 3 | |
| JP 9-274134 A | 21 Oct. 1997 | US 5903379 A <br> column "abstract", <br> fig. 1 | |

Form PCT/ISA/210 (patent family annex) (January 2015)

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090201486
- JP 2016102738 A

- JP 2019131060 A
- JP 2020012904 A